# EUROPEAN PATENT APPLICATION

(11) **EP 4 105 583 A1**
(43) Date of publication of application: **21.12.2022**
(21) Application number: 21020395.6
(22) Date of filing: 03.08.2021
(51) Int. Cl.: F25J 3/08, B01D 59/04

(54) **METHOD AND APPARATUS FOR SEPARATION OF HELIUM-3 FROM HELIUM-4 BY MEANS OF A CRYOGENIC PROCESS**

(30) Priority: 14.06.2021 EP 21020310
(71) Applicant: Linde GmbH, 82049 Pullach (DE); Linde Kryotechnik AG, 8422 Pfungen (CH)
(72) Inventor: Decker, Lutz, 82049 Pullach (DE); Alekseev, Alexander, 82049 Pullach (DE)
(74) Representative: Lu, Jing

(57) **Abstract**

The invention provides a method for recovering 3-Helium (3He) from natural Helium (He), comprising the following steps:
- supplying the feed stream comprising natural liquid helium from an appropriate liquid helium source, for example a bulk helium liquefier or a liquid helium storage vessel,
- introducing a feed stream into a rectification column system, the rectification column system preferably comprising at least three rectification sections connected to one another in series, referred to as lower, intermediate, and upper rectification section, as well as at least two condensers placed above the intermediate section and on the top above the upper section] between the lower and the middle-section,
- condensing at least a first portion of a vapour stream comprising 3He enriched Helium in the intermediate section of the rectification system, preferably by heat exchange with colder liquid Helium produced by means of isenthalpic expansion of a first liquid helium stream taken from the bottom of rectification system to a lower (sub-atmospheric) pressure level,
by means of condenser, wherein the colder liquid helium is evaporated, producing the first low-pressure vapour helium stream, as well as the first portion of a vapour stream is liquefied and provided to the top of the intermediate section of the rectification system as reflux,
- condensing at least a second portion of a vapour stream comprising 3He enriched Helium in the upper section of the rectification system by heat exchange with colder liquid Helium, preferably produced by means of isenthalpic expansion of a second liquid helium stream taken from the bottom of rectification system to the low (sub-atmospheric) pressure level,
by means of condenser, wherein the colder liquid helium is evaporated, producing the second low-pressure vaporous stream, as well as the second portion of a vapour stream is liquefied and provided to the top of the upper section of the rectification system as reflux,
- merging and compressing of the both low-pressure vaporous streams, generated in condensers, by means of a cold compressor to the pressure level corresponding to the pressure in the bottom of the rectification system and provided to the bottom of the rectification system,
- withdrawing an overhead stream comprising 3He enriched Helium from a top section of the rectification system as a product, whereby the concentration of 3He in this product is not higher as 20 mol%,
- withdrawing a bottom stream comprising 3He depleted Helium from a bottom section of the rectification system as a product for storage and distribution,
- withdrawing of a vaporous helium stream from the lower part of the rectification system and providing of this stream to the helium liquefaction system for liquefaction,
as well as a corresponding apparatus.

## Description

### Background of the invention

The present application relates to the recovering of 3-Helium from natural Helium (He), especially liquid He, also referred to as LHe in the following.

Helium in its natural form comprises mainly two isotopes, 3-Helium and 4-Helium (referred to as 3He and 4He in the following). The 3He concentration in naturally occurring He typically in the order of under 1ppm by volume, wherein the remaining Helium essentially consists of 4He.

The term He as used in the following and throughout this specification especially refers to naturally occurring Helium, which is essentially a mixture of 3He and 4He, as already mentioned above. The terms "enriched" and "depleted", as used for example in connection with "3He enriched Helium" or ""3He depleted Helium" shall mean that such Helium has a 3He concentration higher or lower than that of naturally occurring Helium respectively.

For many applications for example in the field of neutron detection, cryogenics and medical imaging, as well as nuclear fusion research, there is a constant need for 3He.

From US 2013/0219956 A1 there is known a system and method for recovering 3He from Helium. Herein, a rectification column system having a top section that is smaller in diameter than a main section is provided.

There is also known a system and method for recovering 3He from Helium.
The present invention seeks for method and system for separation of 3He from a Helium feed, especially from a liquid natural Helium LHe feed, by means of an advanced rectification system and an integrated "cold compressor".

This object is achieved by a method comprising the features of claim 1 and an apparatus comprising the features of claim 6.

The invention provides a method for recovering 3-Helium (3He) from natural Helium (He), comprising the following steps:
- supplying the feed stream comprising natural liquid helium from an appropriate liquid helium source, for example a bulk helium liquefier or a liquid helium storage vessel,
- introducing a feed stream into a rectification column system, the rectification column system preferably comprising at least three rectification sections connected to one another in series, referred to as lower, intermediate, and upper rectification section, as well as at least two condensers placed above the intermediate section and on the top above the upper section] between the lower and the middle-section,
- condensing at least a first portion of a vapour stream comprising 3He enriched Helium in the intermediate section of the rectification system, preferably by heat exchange with colder liquid Helium produced by means of isenthalpic expansion of a first liquid helium stream taken from the bottom of rectification system to a lower (sub-atmospheric) pressure level,
   by means of condenser, wherein the colder liquid helium is evaporated, producing the first low-pressure vapour helium stream, as well as the first portion of a vapour stream is liquefied and provided to the top of the intermediate section of the rectification system as reflux,
- condensing at least a second portion of a vapour stream comprising 3He enriched Helium in the upper section of the rectification system by heat exchange with colder liquid Helium, preferably
   produced by means of isenthalpic expansion of a second liquid helium stream taken from the bottom of rectification system to the low (sub-atmospheric) pressure level,
   by means of condenser, wherein the colder liquid helium is evaporated, producing the second low-pressure vaporous stream, as well as the second portion of a vapour stream is liquefied and provided to the top of the upper section of the rectification system as reflux,
- merging and compressing of the both low-pressure vaporous streams, generated in condensers, by means of a cold compressor to the pressure level corresponding to the pressure in the bottom of the rectification system and provided to the bottom of the rectification system,
- withdrawing an overhead stream comprising 3He enriched Helium from a top section of the rectification system as a product, whereby the concentration of 3He in this product is not higher as 20 mol%,
- withdrawing a bottom stream comprising 3He depleted Helium from a bottom section of the rectification system as a product for storage and distribution,
- withdrawing of a vaporous helium stream from the lower part of the rectification system and providing of this stream to the helium liquefaction system for liquefaction.

Advantageous embodiments of the invention are the subject matter of the dependent claims.

Also, effective use of 4He enriched Helium is made as a refrigerant for condensers interacting with overhead vapour streams produced within the rectification column system. At the same time, 3He can be effectively routed out of the flowpaths of the system and safely stored in dedicated storage vessels. Compared to prior art solutions, 3He present in the He feed is not further utilized as a refrigerant, whereby 3He losses, for example due to leakages in the cooling system of the apparatus, can be minimized Herein lies an advantage in comparison to prior art solutions such as disclosed in US 2013/0219956 A1.

Advantageously, according to the present invention, the lower rectification section does not contain a reboiler. According to the invention, this vapour stream required for the rectification process in the rectification system is provided by the cold compressor, which is fed by vaporous helium from the cold side of both condensers, which are fed by liquid 4He enriched Helium originated from the bottom of the lower rectification

Advantageously, no external heat is required for driving the rectification in the rectification system. Correspondingly, no any additional cooling capacity is required to balance this external heat input. That is highly advantageously in terms of power, since the rectification operates here at extremely low temperature, and generation of every additional cooling capacity means an extremely high power requirements. Advantageously, in terms of cost and reliability, the method does not require a pump for pumping of liquid helium from the bottom of the rectification system to the condensers.

Advantageously, in terms of cost and reliability, the method does require asubcooler for feed stream before entering the rectification system.
Advantageously, in terms of cost and reliability, the method does not require a subcooler for liquid helium provided from the bottom of rectification system to both condensers.

Advantageously, the rectification system operates at pressure level close to the ambient pressure, which means 1-1.2 bar abs. [that is the advantage in comparison to some prior art solutions, where the pressure is given as less 1 bar abs.]. Therefore, no ambient air can enter the rectification system if the system is not leak-tight.

Advantageously, the liquid helium on the cold side of both condensers evaporates at the pressure level higher than 0.6 bar abs. Therefore, the compression in the cold compressors start from this relative high pressure level.

Advantageously, the vaporous helium is compressed in the cold compressor to a pressure level of 1-1.2 bar abs before entering the rectification system. That means a relative low pressure ratio which can be managed by means of a single-stage or double-stage cold compressor.

Advantageously, the helium streams leaving the rectification system at the lower end, are at the ambient pressure of 1-1.2 bar abs, and therefore, do not need a further pressurization or need only a slight pressurization before further processing; the liquid helium can be provided directly to the liquid helium storage.

Advantageously, the top-product is the 3He-contained stream enriched to max. 10 mol% of He3 (not 99%), therefore the temperature on the top of the rectification columns is not lower than 3.8 K, it is not extremely low temperature level, which can be managed in very efficient way in terms of power.

Advantageously the method described above can be extended by a fourth rectification section for further enrichment of 3He-contained product to a concentration of higher than 90 mol%.

Advantageously the method described above can be extended by an additional Helium liquefier for liquefaction of a part of liquid helium, which evaporates inside of the process, avoiding modification on the main helium liquefier, which supplies the liquid natural helium as feed.

In terms of process design, every rectification section can be executed as a single rectification column, or several rectification sections can be combined to a rectification column. Advantageously, the lower and the intermediate rectification sections can be combined to a single column with a condenser on the top, referred to as a first column, whereas the upper rectification section can be executed as a further single column, referred to as the second column, placed on the top of the first column with the second condenser on the top.

In terms of process design, every condenser can be executed as a side condenser located outside of the rectification column or as an integrated condenser located inside or on the top of the corresponding column.

The invention also provides an apparatus for recovering 3He from Helium, the apparatus comprising:
a rectification column system having a first rectification column, which consists of two rectification sections and a second rectification column, placed above the first column;
one condenser placed above the first column, another condenser placed above the second column.
a single stage or double stage cold compressor, which is a centrifugal compressor;
a feed line for introducing a feed stream comprising Helium into the rectification column system at a first location, especially between the lower and the intermediate sections, the feed line being in fluid flow communication with a supply of Helium;
an overhead line for withdrawing an overhead stream comprising 3He enriched Helium from an upper section of third rectification column;
a bottom line for withdrawing a bottom liquid stream comprising 3He depleted Helium from the first rectification column [196];
a line for withdrawing of the gaseous helium from the bottom of the first rectification column [356];
a line for withdrawing of the bottom liquid stream from a lower section [310] of the first rectification column and providing it to both condensers;
and other pipelines described in text below.

Advantageously, the second rectification column has a smaller diameter than the first rectification column. Hereby, the inner volume of the rectification column system can be optimized to accommodate the relatively slow rate at which 3He is separated from the He feed. For example, the diameter of the second rectification column is three to ten times smaller than that of the first rectification column.

Advantageously the apparatus described above can be extended by an additional third rectification column for further enrichment of 3He-contained product to a concentration of higher than 90 mol%

Advantageously the apparatus described above can be extended by an additional second Helium liquefaction system for liquefaction of a part of liquid helium, which evaporates in the apparatus.

The invention will now be further described with reference to the accompanying drawing. Be it noted that lines depicted with a contoured arrow transport vapour, and lines depicted with solid or black arrows liquid phases.

Figure 1 shows a preferred embodiment of an apparatus adapted to perform the method according to the invention, and

Figure 2 shows a further preferred embodiment of an apparatus adapted to perform the method according to the invention.

An apparatus according to a preferred embodiment of the invention is generally designated 100. Apparatus 100 comprises a rectification system 110 comprising a first rectification column 112 and a second rectification column 114. The first rectification column 112 contains two sections referred to as a lower section 112b and an intermediate section 112a, and the second rectification column 114 consisting of a single section 114a referred to as the upper section of the rectification system 110 in this specification. All rectification sections are designed preferably as sections with structured packing, but other designs like sieve trays are principally possible, too.

A liquid Helium LHe feed stream is fed via a feed line 160 from a bulk helium liquefaction system 169 or/and from a liquid helium storage system 162, which provides a supply of natural Helium, i.e. a He3-He4-mixture comprising around 200 ppb He3, to the first rectification column 112, between the lower and the intermediate section.

As mentioned, the concentration of 3He in the liquid Helium feed stream will typically be in the range of 200 ppb. In first rectification column 112, due to the higher volatility of 3He compared to 4He, a vaporous 3He-enriched (and correspondingly 4He depleted) overhead stream exits first rectification column 112 at the upper end of this column and provided to the column 114 via line 175 respectively 175a, where the helium 3 is further enriched. The liquid from the sump of the column 114 is returned to the column 112 by means of the line 217.

The main liquid reflux in the upper part of the column 112 is generated by means of condenser 190, the vapor from the top of the column 112 is provided to the condenser 190 by means of the line 175 respectively 175b, the condensed liquid is returned to the column by means of the line 190 and fed back into the head of first rectification column 112.This flowsheet demonstrates the principle only. Since different types of condensers may be used, and the condenser itself may be integrated into the column systems or executed as a separate unit, other piping schematics may be used.

The 3He concentration of helium in line 175a is typically 1-100 ppm, preferred range is 5-50 ppm, in given example the value of around 10 ppm is used.

With a pressure at the top of first rectification column 112 typically less than 1.2 bar, the respective temperature would be, for example, lower than 4.41 K. At the same time, a pressure at the bottom or sump of first rectification column 112a is typically 30-40 mbar higher, therefore the respective temperature is 0.3-0.4 K higher.

In second rectification column 114, again due to the higher volatility of 3He compared to 4He a further 3He-enrichment occurs. The 3He enriched vaporous stream is extracted from the head region of second rectification column 114 stream through line 185 respectively 185b. The 3He concentration in this line 185b is typically less than 10 mol%, preferably 1-2.5 mol%, in given example the value of 1 mol% is used.

The main liquid reflux in the column 114 is generated by means of condenser 192, the vapor from the top of the column 114 is provided to the condenser 192 by means of the line 185 respectively 185a, the condensed liquid is returned to the column by means of the line 187 and fed back into the head of rectification column 114. This flowsheet demonstrates the principle only. Since different types of condensers may be used, and the condenser itself may be integrated into the column systems or executed as a separate unit, other piping schematics may be used.

The pressure on the top of the column 114 is usually 10-50 mbar lower than at the top of the rectification column 112.

Of the two rectification columns, it is advantageous to design first rectification column 112 as the largest one, i.e. comprising the largest diameter. As mentioned, the 3He solved in the natural Helium feed provided via feed line 160, containing 200 ppb 3He, is efficiently boiled-out in this column. The 3He-content in liquid Helium transported to the sump or lower section of this first rectification column is reduced to the level of 5 ppb by choice of an appropriate reflux ratio in this column. The 3He-content in the upper section of this column amounts to approximately 10 ppm, which means it provides an enrichment by a factor of around 50. First rectification column 112 preferably operates at a pressure slightly above ambient pressure.

Both rectification columns 112, 114 do not require a cooling to temperatures of lower than 3.5 K., since the concentration of the 3He there is still relative low there.

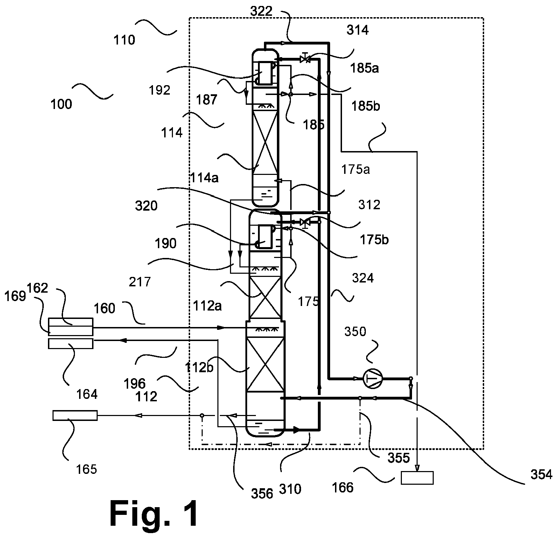

The both condensers (190 and 192) shown in Figure 1 are executed as the so-called bath condensers integrated on top of rectification columns 112 respectively 114. This flowsheet demonstrates the principle only. Since different types of condensers may be used, and the condenser itself may be integrated into the column systems or executed as a separate unit, other piping schematics may be used.

The liquid Helium to the cold side of both condensers (190 and 192) is extracted from the sump of first rectification column 112 (via line 310). This liquid Helium is expanded to a low sub-atmospheric pressure level by means of valves 312, 314, and is provided to the cold side of the condensers 190, respectively 192. It is evaporated in condensers 190, 192 (herein condensing partial Helium streams flowing though lines 175b, 185b). The evaporated helium exits the bath condenser 190 via line 320, the evaporated helium from the bath condenser 192 leaves bath condenser via line 322. These lines 320, 322 are merged to a line 324.

The gaseous helium is provided by means of this line to the cold compressor 350, where the helium is compressed to a pressure level of the first rectification column (1-1.2 bar abs) and is fed into the first rectification column at the lower end by means of line 354. The gaseous Helium supplied to the sump of rectification column 112 is used there as the vaporous stream required for rectification purposes. Therefore, this rectification system 110 does need no reboiler in the sump of the rectification column 112.

The reflux in the lower part of the column 112 is delivered by means of liquid feed 160. The reflux for the intermediate section is generated by means of condenser 190. Therefore, all requirements for successful rectification in column 112 are fulfilled and the rectification process happens. As result of this rectification process the top product is enriched on 3He and the bottom liquid helium product is the 3He-depleded liquid. It is withdrawn via line 196 and provided to the liquid helium storage 164.

The rectification system has no integrated active cold generation. Due to a heat inleak through the non-ideal thermal insulation and the heat generated by cold compressor, a little fraction of the liquid helium evaporates inside of the column. This fraction is withdrawn from the column 112 by means of line 356 and returned to the helium liquefier 169 for liquefaction. Alternatively, this fraction can be withdrawn from the outlet of the cold compressor by means of line 355.

The invention, as shown especially in Figure 1, may also comprise the following features:
Advantageously, first rectification column 112 comprises two sections, one condenser 190, and no reboiler. Second rectification column 114 advantageously comprises one section with packing, one condenser 192 and also no reboiler.

First and second rectification columns 112, 114 may be executed as single units with two integrated condensers 190 and 192 or they can be combined to a single column unit, too. The number of vessels/lines or pipings containing He3 is reduced to a minimum, thereby also minimizing potential leakage.

Advantageously, the process does not make use of or require pumps and subcoolers.

The integration of cold compressor 350 makes it possible to recycle most of the cold Helium inside of the rectification column system. Only a small amount, less than 10% of Helium, i.e. stream 352, must be re-liquefied in the bulk Helium liquefier 162. Therefore, the bulk Helium liquefier 162 is potentially able to provide the cooling capacity for the rectification system. Therefore, the whole system may be considerably reduced in size, costs and power consumption compared to prior art solutions.

The pressure in first rectification column 112 is typically less than 1.2 bar. First rectification column 112 is heated/driven by injection of a gaseous He4-enriched stream (stream 354).

As mentioned, most of the Helium streams outside of the rectification column system, 110 are operated at pressures above ambient pressure.

Advantageously, the first and second condensers can operate at relative high temperatures higher than 3.5 K.

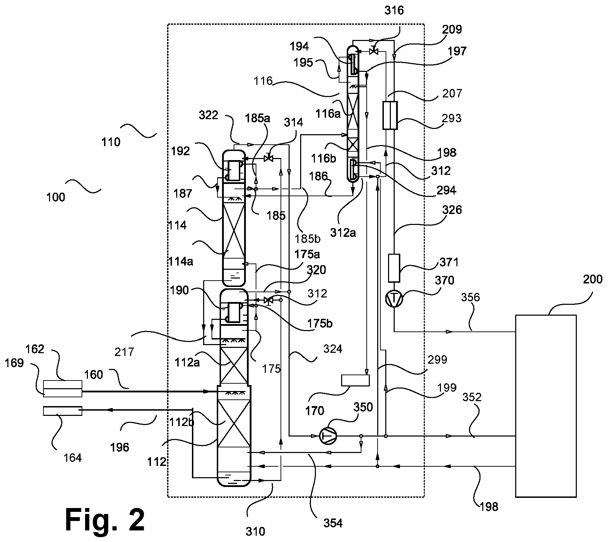

Figure 2 shows a further embodiment of an apparatus adapted to perform the method according to the invention.

It includes the embodiment shown in the Figure 1 described above. Additionally, the apparatus comprises:
a rectification column 116, referred to as third rectification column, with two rectification sections 116a, 116b a reboiler 294 and condenser 194, placed above the rectification column 114;
optionally a subcooler 293;
vacuum pump 370 with pre-heater 371;
an auxiliary helium liquefaction system 200;
a line 185b from the top rectification column 114 to the rectification column 116 introducing a 3He-contained stream between the sections 116a and 116b;
a line 197b for withdrawing an overhead gaseous or optionally liquid stream comprising 3He enriched Helium from the top of the rectification column 116 and forwarding it to unit 170, which is a storage for this product;
a bottom line 186 for withdrawing a bottom liquid stream comprising 3He depleted Helium from the first rectification column and providing it to the top of the rectification column 114;
a line 199 providing a gaseous helium stream to the reboiler 294 from the outlet of cold compressor;
a line 299 providing liqud helium to the outlet reboiler 294 from the liquefaction system 200;
a line 356 providing warm (ambient temperature or even higher temperature) gaseous helium from the outlet vacuum pump to the auxiliary liquefaction system 200 for liquefaction;
a line 352 providing cold (<10K) gaseous helium from the outlet cold compressor to the auxiliary liquefaction system 200 for liquefaction;
a line 198 for returning of liquified helium from the auxiliary liquefaction system to the rectification system 100;
and other pipelines described in text below.

The 3He-enriched stream from the column 114 is provided via line 185b to the third rectification column 116. Here, again based on the higher volatility of 3He compared to 4He, a further 3He-enriched liquid stream, via line 198, is extracted from the upper section of rectification column 116. The 3He-enriched stream is withdrawn, as mentioned, from the upper section of third rectification column and transported to a 3He storage system 170 as a gaseous stream. It is also possible to provide this 3He stream as a liquid substance, if required. The 4He-rich liquid from the bottom of the column 166 is returned to the top of the column 114 by means of the pipeline 186. Optionally, it can be returned to the top of the column 112.

The rectification column 116 is driven by the reboiler 294 placed on the bottom of the column and condenser 194 placed on the top of the column 116. Both these units are shown in Figure 2 as the so-called bath reboiler and bath condenser. This flowsheet demonstrates the principle only. Since different types of reboiler and condenser may be used, and these units itself may be integrated into the column systems or executed as a separate unit, other piping schematics may be used.

The gaseous helium to the warm side of the reboiler 294 is provided by means of pipeline 199 from the outlet of cold compressor 350. This helium is liquefied inside of the reboiler and provided by means of pipelines 312a respectively 312 through the subcooler 293 where it is subcooled, and further by means of pipeline 207 to the valve 316 where it is expanded to a low pressure level of less than 0.5 bar and further to the cold side of the condenser 194 where this cold liquid helium evaporates.

The vaporous helium is removed from the condenser by means of pipeline 209, it is provided through the subcooler 293 and provided further to the heater 371 and vacuum pump 370 by means of the pipeline 326, where it is heated up to a temperature close to the ambient temperature and compressed to a pressure above the ambient pressure. the resulting warm gaseous helium is provided to the auxiliary helium liquefaction system 200, where it is liquefied and returned back to the rectification system by means of the pipeline 198.

The rectification system has no integrated active cold generation. Due to a heat inleak through the non-ideal thermal insulation and the heat generated by cold compressor, a little fraction of the liquid helium evaporates inside of the column. This fraction is withdrawn from the outlet of the cold compressor by means of line 352 and provided to the auxiliary helium liquefaction system 200, where it is liquefied and returned back to the rectification system by means of the pipeline 198.

Of the three rectification columns 112, 114, 116, only third column 116, where 3He is enriched to more than 90 mol%, requires a cooling to temperatures of lower than 3K, whereby the required cooling capacity is relatively low here. Third rectification column 116 is operated at a pressure level close to ambient pressure.

This stream 198 contains more than 90 mol% of He3.

As shown in Figure 2, the auxiliary helium liquefaction system 200 and the rectification column system 100 are directly connected to one another. This auxiliary helium liquefaction system 200 provides the cooling capacity to balance the heat inleak into the rectification system through non-ideal thermal insulation as well as power introduced by means of cold compressor only. It is not connected to the rectification process functionally, which means that the rectification principally can operate without the auxiliary liquefaction system 200, at least for some time.

As the working fluid for the auxiliary helium liquefaction system 200 is extracted from the bottom of first rectification column 112, the composition of this helium corresponds to that of the Helium in the sump of first rectification column 112, which is 3He-depleted fluid.

The subcooler 293 is an optional device only, the system can operate with or without this element.

The integration of cold compressor 350 makes it possible to recycle most of the cold Helium inside of the rectification column system. Only a small amount, less than 10% of the Helium feed, must be re-liquefied in the auxiliary Helium refrigeration system 200. Therefore, the auxiliary helium refrigeration system 200 is a relatively small and compact unit. Therefore, the whole system may be considerably reduced in size, costs and power consumption compared to prior art solutions.
The auxiliary helium liquefier 200 may be provided with liquid nitrogen pre-cooling or without such a pre-cooling.

The invention as shown in Figure 1 may also be divided into two separate process units. For example, a first unit can correspond to the system as shown in Figure 1, i.e. comprising rectification system 100, but without third rectification column 116 and without vacuum pump 370 and without auxiliary Helium liquefaction system 200. Such a system can serve for enrichment of Helium from 200 ppb 3He to 1 to 2mol% 3He. This is sometimes referred to accrued 3He. A second unit can comprise third rectification column 116, vacuum pump 370 and the auxiliary Helium liquefaction system 200 for further enrichment of 3He from 1 to 2mol% to more than 90mol%. The first unit is placed on a bulk Helium liquefier 162 as an add-on-unit for production of accrued 3He. Accrued 3He is then transported to a centralized site, where the second unit is installed and where the final enrichment can be executed.

## Claims

1. Method for recovering 3-Helium (3He) from natural Helium (He), comprising the following steps:
- supplying the feed stream comprising natural liquid helium from an appropriate liquid helium source, for example a bulk helium liquefier or a liquid helium storage vessel,
- introducing a feed stream into a rectification column system, the rectification column system preferably comprising at least three rectification sections connected to one another in series, referred to as lower, intermediate, and upper rectification section, as well as at least two condensers placed above the intermediate section and on the top above the upper section] between the lower and the middle-section,
- condensing at least a first portion of a vapour stream comprising 3He enriched Helium in the intermediate section of the rectification system, preferably by heat exchange with colder liquid Helium produced by means of isenthalpic expansion of a first liquid helium stream taken from the bottom of rectification system to a lower (sub-atmospheric) pressure level,
by means of condenser, wherein the colder liquid helium is evaporated, producing the first low-pressure vapour helium stream, as well as the first portion of a vapour stream is liquefied and provided to the top of the intermediate section of the rectification system as reflux,
- condensing at least a second portion of a vapour stream comprising 3He enriched Helium in the upper section of the rectification system by heat exchange with colder liquid Helium, preferably
produced by means of isenthalpic expansion of a second liquid helium stream taken from the bottom of rectification system to the low (sub-atmospheric) pressure level,
by means of condenser, wherein the colder liquid helium is evaporated, producing the second low-pressure vaporous stream, as well as the second portion of a vapour stream is liquefied and provided to the top of the upper section of the rectification system as reflux,
- merging and compressing of the both low-pressure vaporous streams, generated in condensers, by means of a cold compressor to the pressure level corresponding to the pressure in the bottom of the rectification system and provided to the bottom of the rectification system,
- withdrawing an overhead stream comprising 3He enriched Helium from a top section of the rectification system as a product, whereby the concentration of 3He in this product is not higher as 20 mol%,
- withdrawing a bottom stream comprising 3He depleted Helium from a bottom section of the rectification system as a product for storage and distribution,
- withdrawing of a vaporous helium stream from the lower part of the rectification system and providing of this stream to the helium liquefaction system for liquefaction.

2. Method according to claim 1, wherein the lower rectification section does not contain a reboiler.

3. Method according to claim 1 or claim 2, wherein vapour stream required for the rectification process in the rectification system is provided by the cold compressor, which is fed by vaporous helium from the cold side of both condensers, which are fed by liquid 4He enriched Helium originated from the bottom of the lower rectification.

4. Method according to any one of the preceding claims, wherein no external heat is provided for driving the rectification in the rectification system.

5. Method according to any one of the preceding claims, wherein the rectification system operates at pressure level close to the ambient pressure, preferably 1-1.2 bar abs.

6. Method according to any one of the preceding claims. Wherein liquid helium on the cold side of both condensers evaporates at the pressure level higher than 0.6 bar abs.

7. Method according to any one of the preceding claims, wherein the vaporous helium is compressed in the cold compressor to a pressure level of 1-1.2 bar abs before entering the rectification system.

8. Method according to any one of the preceding claims, wherein the helium streams leaving the rectification system at the lower end are at the ambient pressure of 1-1.2 bar abs.

9. Method according to any one of the preceding claims, wherein the top-product is the 3He-contained stream enriched to max. 10 mol% of He3Advantageously the method described above can be extended by a fourth rectification section for further enrichment of 3He-contained product to a concentration of higher than 90 mol%.

10. Method according to any one of the preceding claims, utilizing an additional Helium liquefier for liquefaction of a part of liquid helium, which evaporates inside of the process.

11. Method according to any one of the preceding claims, wherein every rectification section is provided as a single rectification column, or wherein several rectification sections are combined to a rectification column.

12. Method according to any one of the preceding claims, wherein the lower and the intermediate rectification sections are combined to a single column with a condenser on the top, referred to as a first column, whereas the upper rectification section is provided as a further single column, referred to as the second column, placed on the top of the first column with the second condenser on the top.

13. Method according to any one of the preceding claims, wherein every or at least one condenser is provided as a side condenser located outside of the rectification column or as an integrated condenser located inside or on the top of the corresponding column.

14. Apparatus for recovering 3He from Helium, the apparatus comprising:a rectification column system having a first rectification column, which includes two rectification sections and a second rectification column, placed above the first column; one condenser placed above the first column, another condenser placed above the second column;a single stage or double stage cold compressor, which is a centrifugal compressor;a feed line for introducing a feed stream comprising Helium into the rectification column system at a first location, especially between the lower and the intermediate sections, the feed line being in fluid flow communication with a supply of Helium;an overhead line for withdrawing an overhead stream comprising 3He enriched Helium from an upper section of third rectification column;a bottom line for withdrawing a bottom liquid stream comprising 3He depleted Helium from the first rectification column;a line for withdrawing of the gaseous helium from the bottom of the first rectification column;a line for withdrawing of the bottom liquid stream from a lower section of the first rectification column and providing it to both condensers.

15. Apparatus according to claim 14 wherein the second rectification column has a smaller diameter than the first rectification column, wherein especially the diameter of the second rectification column is three to ten times smaller than that of the first rectification column.

16. Apparatus according to claim 14 or 15, further comprising an additional third rectification column for further enrichment of 3He-contained product to a concentration of higher than 90 mol%.

17. Apparatus according to any one of claims 14 to 16, further comprising an additional second Helium liquefaction system for liquefaction of a part of liquid helium, which evaporates in the apparatus.
